# FASCICULE DE BREVET EUROPEEN

(11) **EP 3 068 219 B1**
(45) Date de publication et mention de la délivrance du brevet: **25.04.2018**
(21) Numéro de dépôt: 14821702.9
(22) Date de dépôt: 13.11.2014
(51) Int. Cl.: A01N 1/02

(54) **SOLUTION AQUEUSE DE CONSERVATION D'UN ORGANE ET UTILISATIONS LORS DE L'ISCHEMIE HYPOTHERMIQUE**
WÄSSRIGE LÖSUNG ZUR KONSERVIERUNG EINES ORGANS UND VERWENDUNGEN WÄHREND HYPOTHERMISCHER ISCHÄMIE
AQUEOUS SOLUTION FOR PRESERVING AN ORGAN AND USES DURING HYPOTHERMIC ISCHEMIA

(30) Priorité: 15.11.2013 FR 1361227
(43) Date de publication de la demande: 21.09.2016
(73) Titulaire: Université Claude Bernard Lyon I, 69622 Villeurbanne Cedex (FR); INSERM (Institut National de la Santé et de la Recherche Scientifique), 75654 Paris Cedex 13 (FR)
(72) Inventeur: FERRERA, René, F-69150 Decines (FR)
(74) Mandataire: Lavoix
(86) Numéro de dépôt international: PCT/FR2014/052897
(87) Numéro de publication internationale: WO 2015/071602

(56) Documents cités:
- EP-A1- 0 806 140
- WO-A1-02/41696
- WO-A2-01/20982
- MASTERS T N ET AL: "EXTENDING MYOCARDIAL VIABILITY DURING HEART PRESERVATION WITH CYCLOSPORINE A", JOURNAL OF HEART AND LUNG TRANSPLANTATION, MOSBY-YEAR BOOK, INC., ST LOUIS, MO, US, vol. 19, no. 1, 1 janvier 2000 (2000-01-01), page 41, XP009002149, ISSN: 1053-2498

## Description

La présente invention concerne le domaine technique des solutions de conservation d'organes. Plus précisément, l'invention concerne des solutions aqueuses de conservation d'un organe, et de préférence du myocarde, comprenant de la ciclosporine A et du taxol et leurs utilisations lors de l'ischémie hypothermique.

Il existe cependant un certain nombre de solutés (moins d'une dizaine) qui sont utilisés en pratique clinique pour conservation du greffon cardiaque. Toutefois, la durée de conservation du greffon cardiaque avant transplantation est actuellement limitée à 4-6 heures, ce qui est assez court.

Il est donc souhaitable de proposer des solutions permettant d'améliorer la durée de conservation, tout en assurant la viabilité de l'organe.

Des centaines de molécules sont potentiellement cardioprotectrices au cours de l'infarctus (situation d'ischémie chaude du coeur). Certaines de ces molécules comme la ciclosporine A (J. Heart Lung Transplant. 2000, 19(1), 41 ; WO 01/20982 ; J. Card. Sur. 2000, Nov-Dec, 15(6), 392-402 ; Transplantation 2003, 15, 76(9), 1314-20 et J. Thorac Cardiovasc. Surg. 2008 Mar, 135(3), 585-93) ou le taxol (EP 0 806 140 ; WO 02/41696) ont même montré leur efficacité pendant la phase d'arrêt hypothermique (situation d'ischémie froide du greffon cardiaque). L'action du taxol sur le pore de transition mitochondrial est, quant à elle, controversée (Clinical Cardiology, vol. 32, Issue 6, pages E94-E96 ; Ann. Pharmacother. 1996 Oct, 30(10), 1110-2 ; J. Cardiovasc. Med. (Hagerstown), 2009 Apr, 10(4), 336-9 ; Eur. J. Med. Res. 2005, Nov 16, 10(11), 498-501 ; FEBS Lett. 1996 Sep 9, 393(1), 86-8 ; J. Biol. Chem. 2002, Feb. 22, 227(8), 6504-10 et J. Biol. Chem. 2005, Jan 7, 280(1), 715-21).

D'autres molécules ont également fait l'objet d'évaluation sur la protection du greffon pendant l'ischémie froide, comme les perfluorocarbones (Transplantation, 2010 May 27;89(10):1169-75), les agents anti-radicalaires (J Cardiovasc. Pharmacol. Ther. 2012 Mar;17(1):93-101), l'érythropoïétine, EPO (J Heart Lung Transplant. 2013 Jun;32(6):633-40), la taurine (Heart Vessels. 2005 Nov;20(6):278-85), ou encore l'inhibition de certains facteurs comme les métalloprotéinases MMP2 (Cardiovasc Toxicol. Cardiovasc. Toxicol. 2013 Oct 9., Epub ahead of print) ou le TNFa par des SiRNA (Circulation, 2009 Sep 22;120(12):1099-107).

A titre d'exemples de solutions proposées, on peut citer les travaux de l'un des inventeurs de la présente demande de brevet, et en particulier ceux décrits dans J. Herat Lung Transplant, 2002, 21 : 1030-1039, qui décrit une première génération de solution nommée LYPS. Dans l'article paru dans Bull. Acad. Natle Méd., 2011, 195 n° 4 et 5, séance du 31 mai 2011, pages 861-881, il est souligné qu'il est très difficile d'établir des études comparatives des milieux de conservation. Une solution LYPS est citée à côté de onze autres solutions utilisées, pour certaines, en clinique.

Un des objectifs de l'invention est de proposer une nouvelle solution de conservation des organes cardiaques, notamment adaptée à une conservation en hypothermie, Cette solution se doit de prolonger la durée de conservation des organes cardiaques, tout en assurant la viabilité et les possibilités de transplantations ultérieures.

Dans ce contexte, l'invention concerne une solution aqueuse de conservation du myocarde comprenant :
- de 100 à 130 mM de Na⁺,
- de 12 à 15 mM de K⁺,
- de 0,25 à 1,3 mM de Ca⁺⁺,
- de 0,25 à 1,5 µM de ciclosporine A, et
- de 0,25 à 1,5 µM de taxol.

Les compositions selon l'invention, comprendront de préférence 1 ± 0,3 µM de taxol et 1 ± 0,3 µM de ciclosporine A, et préférentiellement 1 µM de taxol et 1 µM de ciclosporine A.

L'invention a également pour objet l'utilisation conjointe de la ciclosporine A et du taxol dans une solution utilisée pour la conservation *in vitro* du myocarde, l'utilisation conjointe de la ciclosporine A et du taxol dans une solution utilisée pour la perfusion ou l'immersion hypothermique du myocarde *in vitro,* ainsi que l'utilisation conjointe de la ciclosporine A et du taxol dans une solution utilisée pour la conservation du myocarde, et notamment d'un greffon cardiaque, en hypothermie, en particulier lors d'une ischémie froide, par exemple à une température de 4°C à 15°C, L'invention a également pour objet les procédés de conservation et de perfusion associés.

Dans de tels utilisations et procédés, le myocarde ou greffon cardiaque peut être immergé dans la solution de conservation contenant l'association ciclosporine A / taxol. Il est possible d'utiliser la solution de conservation à titre de solutions cardioplégiques, en particulier pour réaliser une perfusion hypothermique d'un organe cardiaque, notamment à titre de solution physiologique dans un dispositif tel que décrit dans la demande WO2011/077024.

Dans de tels utilisations et procédés, la ciclosporine A et le taxol sont utilisés conjointement, notamment pour assurer la viabilité du myocarde, et notamment d'un greffon cardiaque, avant transplantation. Leur utilisation conjointe permet d'améliorer l'effet obtenu sur la viabilité des cellules du myocarde, notamment lorsque ces dernières sont placées en hypothermie puis soumis à une reperfusion. Les procédés et utilisations décrits pour le myocarde peuvent être étendus à tout type d'organes tels que le rein ou le foie. De tels organes, lorsqu'ils sont utilisés comme greffons sont placés de longues heures dans une situation de conservation statique hypothermique à 4°C (ischémie froide), pendant laquelle il est nécessaire d'éviter que les tissus du greffon s'altèrent progressivement. L'association ciclosporine A / taxol selon l'invention, et notamment les solutions de conservation décrites dans le cadre de l'invention, permettra de protéger les cellules de ces différents greffons des souffrances liées à cette ischémie froide. De manière avantageuse, dans de tels utilisations et procédés, la ciclosporine et le taxol sont chacun présents dans la solution à une concentration de 1 ± 0,5 µM, de préférence à une concentration de 1 ± 0,3 µM, et préférentiellement à une concentration de 1 µM. De manière préférée, la ciclosporine et le taxol sont utilisés dans une solution telle que définie dans le cadre de l'invention.

L'invention va maintenant être décrite en détails.

Dans la présente description, les concentrations sont données par rapport à la solution totale. mM correspond à mmol/L. Dans le cas de l'insuline, UI correspond à Unité Internationale d'activité.

Dans les solutions de conservation selon l'invention, deux agents sont utilisés, pour la première fois, en combinaison dans le cadre de la cardioprotection du greffon cardiaque : il s'agit de la Ciclosporine A (numéro CAS : 59865-13-3) et du Taxol (également connu sous le nom de paclitaxel - numéro CAS : 33069-62-4. Ces deux composés agissent en synergie et assurent une action anti-ischémique. C'est ainsi que la ciclosporine A (CsA) est destinée à inhiber le MPTP (Pore de Transition de Perméabilité Mitochondrial), tandis que le taxol présente une action de stabilisation des microtubules cellulaires. Toutefois, le taxol possède également une action non désirée inverse de la ciclosporine A (ouverture du MPTP). L'association CsA-Taxol envisagée, dans le cadre de l'invention, permet de conserver les effets bénéfiques du taxol tout en limitant ses effets cardio-délétères.

Les solutions selon l'invention ont pour but d'allonger le temps de conservation d'un organe, de préférence du myocarde et en particulier des greffons cardiaques, tout en maintenant la viabilité de l'organe de manière optimale.

En outre, une solution de conservation selon l'invention présente les caractéristiques suivantes :
- Il s'agit d'une solution de type extracellulaire. Elle contient de 100 à 130 mM de Na⁺, et de préférence de 120 ±10 mM de Na⁺. Cette concentration sous-physiologique est destinée à éviter la surcharge sodique intracellulaire (résultant de l'ouverture des canaux sodiques potentiel dépendants) et par voie de conséquence, la surcharge calcique qui en résulte.
- Bien que de type extracellulaire, la composition comprend cependant un niveau de potassium moyennement élevée. Elle contient de 12 à 15 mM de K⁺, et de préférence de 13±1 mM de K⁺. Cette concentration non physiologique de K+ est, à la fois suffisamment élevée pour induire une cardioplégie (arrêt du coeur) par dépolarisation des cardiomyocytes ; et suffisamment basse pour ménager l'endothélium vasculaire, très sensible aux valeurs élevées de K+.
- Il s'agit d'une solution à bas calcium. Elle contient 0,25 à 1,3 mM de Ca⁺⁺, et de préférence de 1±0,3 mM de Ca⁺⁺. Cette concentration de calcium est destinée à éviter la surcharge calcique extrêmement préjudiciable pour le coeur.

La présence de ces différents ions, aux concentrations préconisées précédemment, permet simultanément l'arrêt du coeur (cardioplégie) et la protection contre l'invasion calcique.

De manière avantageuse, dans les solutions selon l'invention, le bas calcium est associé à un, voire deux composés régulant ses échanges, de manière à encore améliorer la protection contre l'invasion calcique :
- le magnésium Mg⁺⁺, compétiteur du Ca⁺⁺, présent de préférence dans la composition à raison de 3,5 à 13 mM, et préférentiellement à raison de 4±0,5 mM, et/ou
- la procaïne inhibiteur des canaux sodiques et par voie de conséquence, inhibiteur de l'entrée de calcium dans la cellule par l'échangeur Na/Ca, présente de préférence dans la composition à raison de 1±0,5 mM. De plus, l'entrée de Na⁺ peut être délétère pour la cellule en hypothermie car inductrice d'oedème. La procaïne inhibant cette entrée cellulaire de Na⁺, elle a un rôle de protection contre les oedèmes.

De manière avantageuse, les solutions de conservation selon l'invention contiennent du polyéthylène glycol (PEG), et en particulier deux types différents de PEG : du PEG de poids moléculaire moyen 8000 Da ± 10% est utilisé pour son activité osmotique vasculaire et du PEG poids moléculaire moyen 20 000 Da ± 10% utilisé pour son rôle anti-inflammatoire et d'immunomasquage des sites antigéniques, L'utilisation de ces deux PEG permet de lutter plus efficacement contre l'oedème. De manière classique, le poids moléculaire des PEG peut être déterminé en utilisant la méthode de perméation chromatographique sur gel.

En particulier, la solution selon l'invention comprendra :
- un polyéthylène glycol d'un poids moléculaire moyen de 8 000 Daltons ± 10%, à raison de 2 ± 0,5 g/L, et
- un polyéthylène glycol d'un poids moléculaire moyen de 20 000 Daltons ± 10%, à raison de 3 ± 0,5 g/L.

Il est également souhaitable que les solutions de conservation selon l'invention contiennent des substrats et/ou activateurs métaboliques :
- le glucose associé à l'insuline pour stimuler la glycolyse anaérobie : l'insuline stimule l'entrée et l'utilisation du glucose dans la cellule; et/ou
- le pyruvate associé à l'insuline destiné à activer la glycolyse aérobie : l'insuline stimule l'utilisation du pyruvate dans la mitochondrie pour produire de l'énergie. Le pyruvate a une fonction anti-radicalaire ; et/ou
- le glutamate associé à l'aspartate pour stimuler le cycle de krebs : l'aspartate et le glutamate, sont 2 acides aminés capables, en combinaison et en présence de pyruvate, d'être utilisés par la mitochondrie en absence d'oxygène, pour produire de l'énergie.

Ces différents composés agissent en synergie et permettent une activation du métabolisme des cellules cardiaques, malgré une hypothermie profonde, par exemple, à 4°C, en particulier l'activation du cycle de krebs et par voie de conséquence la phosphorylation oxydative mitochondriale.

Aussi, de manière avantageuse, les solutions de conservation selon l'invention, comprennent ;
- Soit de 250 ± 10 UI/L d'insuline et de 20 ± 1 mM de glucose,
- Soit de 250 ± 10 UI/L d'insuline et de 2,5 ± 0,1 mM de pyruvate,
- Soit de 250 ± 10 UI/L d'insuline, de 20 ± 1 mM de glucose, et de 2,5 ± 0,1 mM de pyruvate,
- Soit de 2,5 ± 0,1mM de pyruvate, de 2 ± 1 mM d'aspartate et de 1,4 ± 1 mM et du glutamate,
- Soit de 250 ± 10 UI/L d'insuline, de 2,5 ± 0,1 mM de pyruvate, de 2 ± 1 mM d'aspartate et de 1,4 ± 1 mM de glutamate,
- Soit de 250 ± 10 UI/L d'insuline, de 20 ± 1 mM de glucose, de 2,5 ± 0,1 mM de pyruvate, de 2 ± 1 mM d'aspartate et de 1,4 ± 1 mM de glutamate,
- Soit de 250 ± 10 UI/L d'insuline, de 20 ± 1 mM de glucose, de 2,5 ± 0,1 mM de pyruvate, de 2 ± 1 mM d'aspartate et de 1,4 ± 1 mM de glutamate.

Dans les solutions selon l'invention, les ions Na⁺, K⁺, Ca⁺⁺ et Mg⁺⁺ quand ces derniers sont présents, sont, en général, introduits sous la forme de sels, notamment sous la forme NaCl, KCl, CaCl₂ et MgCl₂, respectivement, ou bien sous la forme de contre-ions d'autres composés introduits, du type aspartate, pyruvate et glutamate. Les solutions selon l'invention comporteront donc, en général, des ions Cl⁻, en relation avec les quantités d'ions Na⁺, K⁺, Ca⁺⁺ et Mg⁺⁺ présentes.

Les solutions de conservation selon l'invention peuvent éventuellement contenir de l'adénosine, de préférence à raison de 5 ± 1 mM. L'adénosine est un vasodilatateur et également un activateur de la voie de signalisation PKC, connu pour ses effets cardioprotecteurs.

Les solutions de conservation selon l'invention peuvent éventuellement contenir, en outre, un agent anti-radicalaire, tel que le glutathion réduit (numéro CAS 70-18-8), de préférence à raison de 5 ±1 mM.

De manière avantageuse, les solutions selon l'invention ont une osmolarité et/ou un pH proche(s) des valeurs physiologiques. De préférence, les solutions de conservation selon l'invention présente une osmolarité dans la gamme allant de 280 à 320 mOsm/L, et préférentiellement d'environ 290 mOsm/L. Les solutions de conservation selon l'invention sont préférentiellement tamponnées à un pH de 7,35 ±0,05. Tout type de solutions tampons adaptées, telle qu'une solution d'HEPES (acide 4-(2-hydroxyéthyl)-1-pipérazine éthane sulfonique), d'histidine ou une solution phosphate, pourra être utilisé.

A titre d'exemple particulier de compositions d'une solution selon l'invention, on peut citer les compositions qui comprennent :
- 120 ±10 mM de Na⁺,
- 13 ±1 mM de K⁺,
- 1 ± 0,3 mM de Ca⁺⁺,
- 1 ± 0,5 µM de ciclosporine A,
- 1 ± 0,5 µM de taxol,
- 4 ± 0,5 mM de Mg⁺⁺,
- 130 ± 12 mM de Cl⁻,
- 2 ± 0,5 g/L de polyéthylène glycol de poids moléculaire moyen de 8 000 Daltons ± 10%,
- 3 ± 1 g/L de polyéthylène glycol de poids moléculaire moyen de 20 000 Daltons ± 10%,
- 250 ± 10 UI/L d'insuline,
- 20 ± 1 mM de glucose,
- 2,5 ± 0,1mM de pyruvate,
- 2 ± 1 mM d'aspartate,
- 1,4 ± 1 mM de glutamate,
- 1 ± 0,5 mM de procaïne,
- et de l'eau.

Il est également possible d'ajouter à cette composition 5 ± 1 mM d'adénosine, et/ou 5 ± 1 mM de glutathion réduit.

Cette solution pourra être tamponnée à un pH de 7,35 ± 0,1 avec un tampon HEPES.

A titre d'exemple plus précis d'une telle composition, on peut citer une composition qui comprend :
- 120 mM de Na⁺,
- 13 mM de K⁺,
- 1 mM de Ca⁺⁺,
- 1 µM de ciclosporine A,
- 1 µM de taxol,
- 4 mM de Mg⁺⁺,
- 130 mM de Cl⁻,
- 2 g/L de polyéthylène glycol de poids moléculaire moyen de 8 000 Daltons,
- 3 g/L de polyéthylène glycol de poids moléculaire moyen de 20 000 Daltons,
- 250 UI/L d'insuline,
- 20 mM de glucose,
- 2,5 mM de pyruvate,
- 2 mM d'aspartate,
- 1,4 mM de glutamate,
- 1 mM de procaïne,
- et de l'eau.

La composition de telles solutions résulte d'un choix parmi des centaines de composés possibles, à une concentration quasi-optimale, associés à d'autres composés avec qui, ils sont en interaction, ce qui permet d'agir à différents niveaux de la protection du coeur en hypothermie, et donne leur efficacité particulièrement satisfaisante auxdites solutions.

Il est également possible que les solutions de conservation selon l'invention contiennent un fluidifiant membranaire, tel que l'éthanol, de préférence, à raison 10 ± 5 mM. Un tel composé serait destiné à fluidifier les membranes cellulaires qui ont tendance à se rigidifier lors de l'hypothermie, bloquant les pompes ioniques.

Les exemples ci-après, en 3 référence aux Figures annexées, permettent d'illustrer l'invention mais n'ont aucun caractère limitatif.
La **Figure 1** met en évidence l'effet de la ciclosporine et du taxol sur la viabilité des cardiomyocytes primaires de rat.
La **Figure 2** met en évidence l'effet de la ciclosporine et du taxol sur la viabilité des cardiomyocytes H9c2.
La **Figure 3** met en évidence l'effet synergique de la ciclosporine et du taxol sur la viabilité des cardiomyocytes primaires de rat.
La **Figure 4** met en évidence l'effet synergique de la ciclosporine et du taxol sur la viabilité des cardiomyocytes H9c2,
La **Figure 5** met en évidence l'effet synergique de la ciclosporine et du taxol sur des coeurs entiers de rat suite à une ischémie froide - reperfusion.
La **Figure 6** met en évidence l'effet synergique de la ciclosporine et du taxol sur la nécrose de coeurs entiers de rat à la reperfusion.

### EXEMPLES

L'objectif général des études qui suivent est d'améliorer la survie des cellules cardiaques soumises à une ischémie froide (4°C), suivie d'une reperfusion normothermique, situation rencontrée par le greffon cardiaque avant transplantation.

L'utilisation combinée de la Ciclosporine A et du Taxol a été évaluée, afin de mettre en évidence leur action synergique.

Dans cette étude, les modèles utilisés sont :
- Culture cellulaire de cardiomyocytes de rat (en culture primaire et en lignée).
- Coeur isolé perfusé de rat en mode Langendorff.

### 1 Détermination des concentrations optimales

### 1-1 Matériel et méthodes

### 1-1-1 Préparation des cardiomyocytes primaires

Il s'agit d'un modèle classique de culture primaire de cardiomyocytes. Environ 40 rats nouveau-nés sont utilisés à chaque expérimentation. Les ratons sont décapités et placés pendant 5 secondes dans un bêcher contenant de l'alcool à 70°C. Le ventricule gauche de chaque coeur est minutieusement prélevé, puis est déposé dans un Erlenmeyer contenant du PBS froid (GIBCO, pH 7,4) conservé dans de la glace. Une fois tous les coeurs prélevés, ceux-ci sont lavés 3 fois au PBS, puis transférés dans une boîte de Pétri d35. Ils sont alors réduits en très fins fragments. Les fragments obtenus sont lavés, de nouveau, 3 fois. Ces fragments sont placés dans le trypsinateur et 9 trypsinations (PBS à 0,3% de trypsine) de 10 min à 37°C sont réalisées. Après centrifugation (10 min à 1500 g), les surnageants sont éliminés et les culots sont suspendus dans du milieu de croissance à 37°C. Afin de séparer les cardiomyocytes (CM) et les cardiofibroblastes (CF), 2 attachements différentiels (30 min et 120 min) sont réalisés. Les différents types cellulaires sont repris en milieu de croissance supplémenté avec 15% de SVF (PAA®), et comptés sur cellule de Mallassez. Les cellules sont ensuite ensemencées à raison de 2,5.10⁵ cellules/cm².

### 1-1-2 Préparation des cardiomyocytes en lignée

Il s'agit d'un modèle classique de culture de cardiomyocytes de rat. Les cellules cardiaques H9c2 (ATTC®) proviennent de ventricules cardiaques de rats transfectés avec un plasmide pSV3 contenant le gène SV40. Ces cellules sont cultivées dans le milieu DMEM high glucose (PAA®), supplémenté avec 10% de SVF Mycoplex (PAA®) et 1% de Penicilline-Streptomycine. Le milieu est changé tous les 2 jours et les repiquages sont réalisés à 70-80% de confluence.

### 1-1-3 Test de viabilité au MTT

Le MTT, ou triméthyltétrazolium (Sigma), est une molécule qui se lie aux DH (déshydrogénases) mitochondriales pour former, en présence de coenzymes NAD+ et NADP+, des cristaux de formazan insolubles de couleur violette. La coloration violette formée témoigne de la fonctionnalité mitochondriale et donc de la viabilité cellulaire. Ces cristaux sont solubilisés dans une solution de perméabilisation (diméthyl sulfoxyde ou DMSO, Sigma). Cette solubilisation du formazan provoque, en outre, une lyse des cellules. Une lecture des plaques est réalisée par spectrophotométrie (Multiskan Ex, Thermo, Electron corporation®) à 550 nm.

### 1-1-4 Procédure d'ischémie froide-reperfusion

L'objectif de ce protocole est de déterminer le potentiel effet protecteur de la ciclosporine et/ou du taxol sur des cardiomyocytes placés en situation d'ischémie froide, à 4°C, pendant 24 heures, suivie d'une reperfusion de 24 heures, à l'issue de laquelle un test de viabilité (le test MTT) est mis en oeuvre. Un groupe nommé « sham » ne subit pas de séquence d'ischémie-reperfusion. Pour chacune des doses testées, 4 expérimentations différentes sont réalisées et lors de chaque expérimentation, 8 puits cellulaires différents sont testés simultanément.

L'analyse statistique consiste en une comparaison des moyennes (test de Student entre le groupe étudié et le groupe contrôle).

### 1-2 Résultat. Modèle cellulaire de cellules cardiaques de rat en culture primaire.

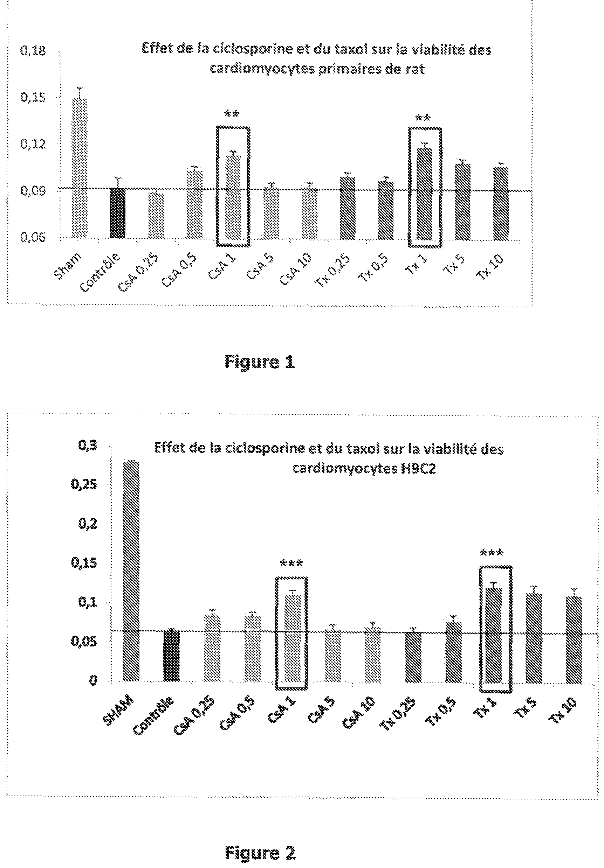

La viabilité des cardiomyocytes primaires est évaluée après 24 heures d'ischémie froide et 24 heures de reperfusion. Pendant l'ischémie froide, les cellules sont maintenues dans différents milieux et les résultats correspondants sont présentés **Figure 1** **:**
- Dans une solution basale de Saint-Thomas (solution cardioplégique) = groupe « Contrôle ». Le trait noir horizontal correspond donc à la viabilité de base des cardiomyocytes dans cette condition standard d'ischémie froide - reperfusion.
- Dans la même solution basale additionnée de ciclosporine A (CsA), afin d'obtenir une concentration finale dans le milieu de 0,25µM (groupe CsA 0,25), ou 0,5µM (groupe CsA 0,5), ou 1µM (groupe CsA 1), ou 5µM (groupe CsA 5), ou 10µM (groupe CsA 10).
- Dans la même solution basale additionnée de taxol (Tx), afin d'obtenir une concentration finale dans le milieu de 0,25µM (groupe Tx 0,25), ou 0,5µM (groupe Tx 0,5), ou 1µM (groupe Tx 1), ou 5µN (groupe Tx 5), ou 10µM (groupe Tx 10).

Le group Sham ne subit pas la séquence d'ischémie froide -

reperfusion. Les valeurs correspondent à des moyennes ± SEM (n= 32, réalisés en 4 séries d'expérimentations différentes sur 4 semaines). ** **:** p<0,01.

Les données de la **Figure 1** indiquent que **:**
- La ciclosporine A, comme le taxol, est susceptible, à certaines concentrations, d'augmenter la viabilité des cellules cardiaques au cours d'une séquence d'ischémie froide - reperfusion.
- Il existe un optimum de concentration pour chacun de ces 2 agents, autour de 1µM (résultats encadrés sur la **Figure 1**), permettant d'augmenter la viabilité des cardiomyocytes d'environ 25% (p<0,01).

### 1-3 Résultat. Modèle cellulaire de cellules cardiaques en lignée H9c2.

La viabilité des cardiomyocytes est évaluée après 24 heures d'ischémie froide et 24 heures de reperfusion. Pendant l'ischémie froide, les cellules sont maintenues dans différents milieux et les résultats correspondants sont présentés **Figure 2** :
- Dans une solution basale de Saint-Thomas (solution cardioplégique) = groupe « Contrôle ». Le trait noir horizontal correspond donc à la viabilité de base des cardiomyocytes dans cette condition standard d'ischémie - reperfusion.
- Dans la même solution basale additionnée de ciclosporine A (CsA), afin d'obtenir une concentration finale dans le milieu de 0,25µM (groupe CsA 0,25), ou 0,5µM (groupe CsA 0,5), ou 1µM (groupe CsA 1), ou 5µM (groupe CsA 5), ou 10µM (groupe CsA 10).
- Dans la même solution basale additionnée de taxol (Tx), afin d'obtenir une concentration finale dans le milieu de 0,25µM (groupe Tx 0,25), ou 0,5µM (groupe Tx 0,5), ou 1µM (groupe Tx 1), ou 5µM (groupe Tx 5), ou 10µM (groupe Tx 10).

Le groupe « Sham » ne subit pas la séquence d'ischémie froide - reperfusion.

Les valeurs correspondent à des moyennes ± SEM (n= 32, réalisés en 4 séries d'expérimentations différentes sur 4 semaines). *** : p<0.001.

Comme sur le modèle précédent, les données de la **Figure 2** confirment que :
- La ciclosporine A, comme le taxol, est susceptible, à certaines concentrations, d'augmenter la viabilité des cellules cardiaque au cours d'une séquence d'ischémie froide - reperfusion.
- Il existe un optimum de concentration pour chacun de ces 2 agents, autour de 1µM (résultats encadrés sur la **Figure 2**), permettant d'augmenter la viabilité des cardiomyocytes d'environ 75% pour la ciclosporine A et de 90% pour le Taxol (p<0,001).

### 2 Recherche d'un effet synergique CsA-Tx

### 2-1 Matériel et méthodes

Les cellules et les procédures utilisées sont les mêmes que dans la partie 1.

La solution St Thomas utilisée dans ce travail a la composition suivante (en mM) : Na⁺ : 147 ; K⁺ **:** 20 ; Ca⁺⁺ : 2 ; Mg⁺⁺ **:** 16 ; Cl⁻ : 203 ; H₂0 : qsp 1000 mL Osmolarité : 388 mOsm/L.

La composition de la solution LYPS est donnée dans le **TABLEAU 1** ci-après,

**TABLEAU 1 : Composition de la solution LYPS**

| **Composants** | **LYPS** |
|---|---|
| **Ions** | |
| Na⁺ | 120 mM |
| K⁺ | 13 mM |
| Ca²⁺ | 1 mM |
| Mg²⁺ | 4 mM |
| Cl⁻ | 130 mM |
| | |
| **Tampon** | HEPES |
| **Macromolécules** | |
| PEG (PM 8 000) | 2 g/L |
| PEG (PM 20 000) | 3 g/L |
| | |
| **Substrats métaboliques** | |
| Glucose | 20 mM |
| Insuline | 250 UI/L |
| | |
| Glutamate | 1,4 mM |
| Aspartate | 2 mM |
| | |
| Pyruvate | 2,5 mM |
| | |
| **Agents cardioprotecteurs** | |
| Ciclosporine | 1 µM |
| Taxol (paclitaxel) | 1 µM |
| Procaïne | 1 mM |
| | |
| pH | 7,35 |
| Osmolarité (mOsm/L) | 290-310 |
| | |

Pour sa préparation, cette solution est préparée de la manière suivante **:**
- Pesée les sels (NaCl, KCl, CaCl₂, MgSO₄), et les dissoudre par agitation à température ambiante dans un volume d'eau connu (environ 700 ml pour une préparation d'1 litre de solution finale).
- Rajout sous agitation de l'Hépès, de la procaïne hydrochlorure, du glucose et du pyruvate de sodium.
- Peser indépendamment et dissoudre sous agitation, à la température de 40°C, dans des petits volumes d'eau (environ 25 ml pour la préparation d'1 litre de solution finale). les composés suivants : l'acide glutamique, l'acide aspartique, le PEG 8 000 et le PEG 20 000.
- Attendre la dissolution des composés précédents et les rajouter dans le mélange initial, toujours sous agitation.
- Rajouter successivement sous agitation à température ambiante les 3 derniers composés, préalablement dissouts dans leur véhicule **:** l'insuline, la ciclosporine A et le paclitaxel.
- Ajuster le volume à quasiment 1L (950 ml pour la préparation d'1 litre de solution finale).
- Mesurer le pH à 25°C : il doit se situer vers 4,80.
- Ajuster le pH à 7,15 avec du NaOH 10N à 25°C.
- Filtrer la solution à 0,22 µm.
- Placer la solution à 4°C
- Une fois la température abaissée, vérifier le pH à 4°C : il doit se situer autour de 7,40.

Le pyruvate, le glutamate et l'aspartate sont introduits respectivement sous la forme de pyruvate de sodium (C₃H₃NaO₃), d'acide glutamique (C₅H₉NO₄) et d'acide aspartique de potassium (C₄H₆KNO₄). Les ions Na⁺, K⁺, Ca⁺⁺ et Mg⁺⁺ sont introduits sous la forme NaCl, KCl, CaCl₂ et MgSO₄ pour obtenir les concentrations totales souhaitées au final.

### 2-2 Résultat. Modèle cellulaire de cellules cardiaques de rat en culture.

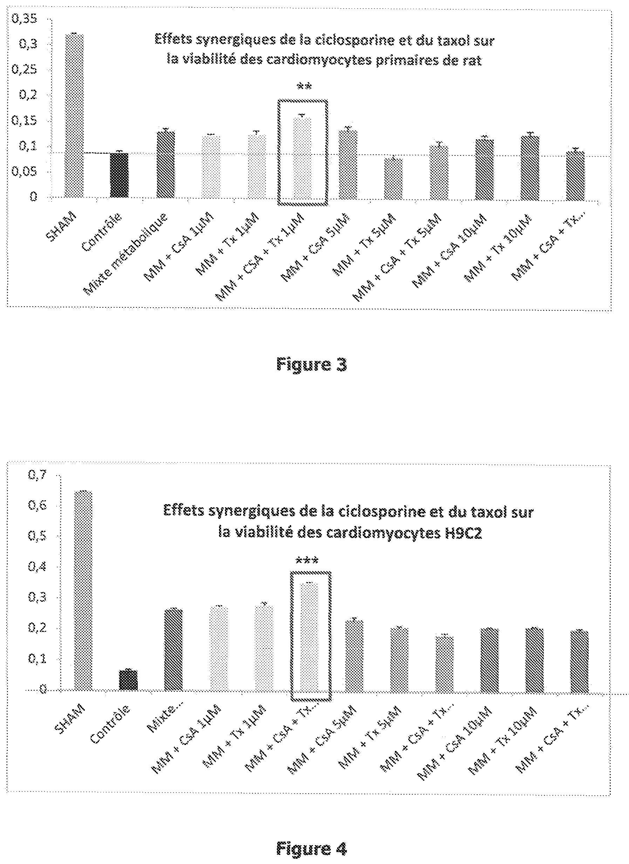

Comme précédemment, la viabilité des cardiomyocytes primaires est évaluée après 24 heures d'ischémie froide et 24 heures de reperfusion. Pendant l'ischémie froide, les cellules sont maintenues dans différents milieux et les résultats correspondants sont présentés Figure 3 :
- Dans une solution basale de Saint-Thomas (solution cardioplégique) = groupe « Contrôle ».
- Dans la solution LYPS (sans ciclosporine A et sans taxol) = groupe « mixte métabolique » ou « MM ».
- Dans la même solution « MM » additionnée de ciclosporine A seule (CsA), de taxol seul (Tx) ou d'une combinaison CsA+Tx, avec une concentration finale dans le milieu de 1µM pour chacun des 2 composés.
- Les mêmes combinaisons que précédemment sont réalisées avec des concentrations de CsA et de Tx de 5µM et de 10µM.

Le groupe Sham ne subit pas la séquence d'ischémie froide - reperfusion.

Les valeurs correspondent à des moyennes ± SEM (n= 32, réalisés en 4 séries d'expérimentations différentes sur 4 semaines). ** : p<0,01.

Les données de la **Figure 3** indiquent que :
- Le mixte métabolique (MM = solution LYPS sans CsA ni Tx) protège mieux les cardiomyocytes que la situation contrôle (= solution St Thomas).
- La ciclosporine A et le taxol, ajoutés seuls à LYPS n'apportent rien, en termes d'effet cardioprotecteur. En effet, les groupes « MM+CSA 1µM », « MM+Tx IpM » « MM+CsA 5µM », « MM+Tx 5µM », « MM+CsA 10µM », et « MM+Tx 10µH » sont identiques voire inférieurs au groupe de référence « MM ».
- Seule la combinaison CsA+Tx, ajoutée à LYPS à la concentration de 1µM, montrent un effet cardioprotecteur marqué, avec une viabilité des cellules augmentée de 23% par rapport au groupe LYPS seul « MM ». Les autres combinaisons à 5 et 10 µM n'apportent rien et semblent même plutôt délétères.

### 2-3 Modèle cellulaire de cellules cardiaques en lignée H9c2.

Comme précédemment, la viabilité des cardiomyocytes H9c2 est évaluée après 24 heures d'ischémie froide et 24 heures de reperfusion. Pendant l'ischémie froide, les cellules sont maintenues dans différents milieux et les résultats correspondants sont présentés **Figure 4** :
- Dans une solution basale de Saint-Thomas (solution cardioplégique) = groupe « Contrôle ».
- Dans la solution LYPS (sans ciclosporine A et sans taxol) = groupe « mixte métabolique » ou « MM ».
- Dans la même solution « MM » additionnée de ciclosporine A seule (CsA), de taxol seul (Tx) ou d'une combinaison CsA-Tx, avec une concentration finale dans le milieu de 1µM pour chacun des 2 composés,
- Les mêmes combinaisons que précédemment sont réalisées avec des concentrations de CsA et de Tx de 5µM et de 10µM.

Le groupe « Sham » ne subit pas la séquence d'ischémie froide - reperfusion.

Les valeurs correspondent à des moyennes ± SEM (n= 32, réalisés en 4 séries d'expérimentations différentes sur 4 semaines). *** : p<0,001.

Les données de la **Figure 4** confirment que :
- Le mixte métabolique (MM = solution LYPS sans CsA ni Tx) protège mieux les cardiomyocytes que la situation contrôle (=solution St Thomas, barre noire).
- La ciclosporine A et le taxol, ajoutés seuls à LYPS n'apportent rien, en terme d'effet cardioprotecteur. En effet, les groupes « MM+CsA 1µM », « MM+Tx 1µM », « MM+CsA 5µM », « MM+Tx 5µM », « MM+CsA 10µM », et « MM+Tx 10µM » sont identiques voire inférieurs au groupe de référence « MM ».
- Seule la combinaison CsA+Tx, ajoutée à LYPS à la concentration de 1µM, montrent un effet cardioprotecteur marqué, avec une viabilité des cellules augmentée de 34% par rapport au groupe LYPS seul « MM ». Les autres combinaisons à 5 et 10 µM n'apportent rien et semblent même plutôt délétères.

### 3 Confirmation d'un effet synergique CsA-Tx sur coeur entier

Afin de confirmer l'effet cardioprotecteur synergique de l'association « Ciclosporine A - Taxol », des études sur un modèle de coeur entier isolé de rat, soumis à une séquence d'ischémie froide - reperfusion ont été réalisées. Afin de se rapprocher encore des conditions rencontrées en clinique, la solution Celsior, connue des chirurgiens et capable d'assurer une bonne protection initiale contre les lésions d'ischémie-reperfusion, a été utilisée. Le taxol ou la ciclosporine ou la combinaison des 2 agents, ont été testés à la concentration de 1µM, ainsi que les travaux précédents le préconisaient.

La solution Celsior est une solution aqueuse contenant 100 mM de Na⁺, 15 mM de K⁺, 0,25 mM de Ca⁺⁺, 41,5 mM de Cl⁻, 13 mM de Mg⁺⁺, 80 mM de lactobionate, 60 mM de mannitol20 mM de glutamate 30 mM d'histidine, et 3 mM de glutathion réduit.

### 3-1 Matériel et méthodes

### 3-1-1 Prélèvement -des coeurs et ischémie froide

Les rats sont anesthésiés par une injection intrapéritonéale de pentobarbital sodique (50mg/kg). Ils sont ensuite disposés en décubitus dorsal. Après isolement de la veine fémorale, de l'héparine est administrée par la voie intraveineuse (200 UI/Kg). Une incision abdominale, puis thoracique, est réalisée. Le sternum est tiré vers la tête du rat, à l'aide d'un clamp, et le diaphragme est disséqué, Le coeur isolé de son péricarde est excisé et arrêté dans la solution hypothermique de Celsior. Le coeur est ensuite perfusé pendant 3 minutes avec la même solution additionnée ou non de ciclosporine A, de Taxol ou de la combinaison de ces 2 agents, à la concentration de 1µM dans la solution finale. Les coeurs sont ensuite placés à 4°C, dans la même solution pendant 8 heures (c'est la phase d'ischémie froide), avant la reperfusion (c'est la phase de réanimation).

### 3-1-2 Reperfusion des coeurs et évaluation fonctionnelle

Après les 8 heures d'ischémie froide, le coeur est fixé par son aorte sur une canule, en vue d'une perfusion rétrograde continue avec du Krebs Henseleit (KH, dont la composition est la suivante, en mM: Glucose 11,0 ; NaCl 118,5 ; KCl 4,75 ; MgSO₄ 1,19 ; KH₂PO₄ 1,2 ; NaHCO₃ 24,0 ; CaCl₂ 1,4). La pression imposée, constante, est à 100 cm H₂O (correspondant à 73 mm de Hg). La solution KH est en bullage continu avec 95% O₂ + 5% CO₂, afin de maintenir le pH à 7,4. Cette technique de perfusion est connue de l'homme du métier et nommée système de perfusion en mode Langendorff, ou coeur battant non travaillant.

Un ballonnet en latex est installé dans le ventricule gauche et relié à un capteur de pression étalonné au préalable par une calibration interne (0-200 mm de Hg). En début de reperfusion, le ballonnet est gonflé pour obtenir une pression télédiastolique de 5 mm de Hg environ. Des électrodes de stimulation sont ensuite installées sur les oreillettes. Les coeurs sont stimulés à une fréquence de 300 battements/min.

Un système d'enregistrement, composé d'un capteur de pression, d'un moniteur (HP 785334 A) et d'un logiciel d'acquisition des données (Chart), permet de mesurer les paramètres fonctionnels à différents temps, dont la pression ventriculaire gauche développée (PGVD) et la fréquence cardiaque (FC).

### 3-1-3 Evaluation de la nécrose myocardique

A la fin de la reperfusion, le coeur est coupé parallèlement à la base en 5 tranches de 2 mm d'épaisseur environ, Les tranches sont ensuite incubées pendant 20 min à 37°C dans une solution de Chlorure de Triphényltetrazolium (TTC) à 1% à pH 7,4. Le myocarde «viable» apparaît coloré en rouge brique, alors que l'aire nécrosée (AN) ou zone infarcie apparaît pâle car non marquée. Toute la surface myocardique est considérée comme aire à risque (AR). Pour chaque tranche, le rapport AN/AR est exprimé en % et représente la taille de l'infarctus. La somme des infarctus de toutes les coupes appartenant au même ventricule gauche permet d'obtenir la quantité de la nécrose du coeur concerné,

Les lactates déshydrogénases (LDH) et les créatines phospho-kinases (CPK) sont recueillies dans les effluents coronaires des coeurs de rat perfusés *in vitro.* Ces enzymes témoignent de la nécrose myocardique. Leur présence dans l'effluent est proportionnelle au niveau de la nécrose myocardique.

En pratique, la vitesse de consommation du NADH est déterminée par photométrie (340 nm), elle est proportionnelle à l'activité des enzymes dans l'échantillon. Les résultats sont exprimés en UI/L/g de poids sec de coeur.

L'analyse statistique consiste en une comparaison des moyennes (ANOVA), suivie du test post-hoc de Bonferroni.

### 3-2 Protocole sur modèle de coeur isolé perfusé

Ce protocole a pour but de se rapprocher des conditions rencontrées par le greffon cardiaque en situation clinique. C'est ainsi qu'il a été choisi de travailler sur un modèle de coeur isolé placé en ischémie froide-reperfusion. L'objectif de cette étude est donc de confirmer le potentiel effet cardioprotecteur et synergique de la ciclosporine associée au taxol.

Le protocole mis en oeuvre étudie l'effet de ces 2 agents sur la reprise fonctionnelle et la nécrose des coeurs soumis à une ischémie froide de 8heures, à 4°C, suivie d'une reperfusion de 1 heure à 37°C, en mode Langendorff. Quatre groupes de 6 coeurs ont été randomisés comme suit :
- Un groupe « Contrôle », où les coeurs sont conservés 8 heures sous ischémie froide dans la solution Celsior,
- Un groupe « Tx » où les coeurs sont conservés 8 heures sous ischémie froide dans la solution Celsior supplémentée avec du taxol à 1 µM,
- Un groupe « CsA » où les coeurs sont conservés 8 heures sous ischémie froide dans la solution Celsior supplémentée avec de la ciclosporine à 1 µM,
- Un groupe « Tx+CsA » où les coeurs sont conservés 8 heures sous ischémie froide dans la solution Celsior supplémentée avec du taxol et de la ciclosporine, tous deux à 1 µM.

### 3-3 Résultats fonctionnels

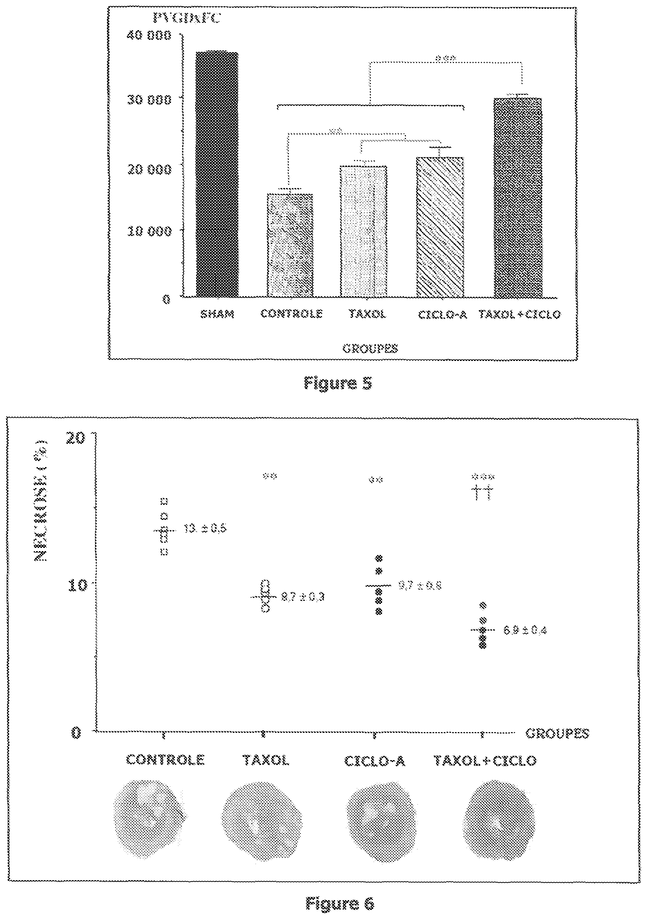

La **Figure 5** présente les résultats obtenus sur les coeurs conservés 8 heures à 4°C dans la solution Celsior (groupe « Contrôle »), supplémentée à 1µM de Taxol (groupe « Taxol »), ou à 1µM de ciclosporine A (groupe « Ciclo-A »), ou à 1µM de ciclosporine A et de Taxol (groupe « Taxol+Ciclo »). Le groupe « Sham » est un contrôle non ischémique. A l'issue de l'ischémie froide, les coeurs sont reperfusés pendant une heure et des évaluations fonctionnelles sont réalisées : l'indice PVGDxFC correspond à la pression ventriculaire gauche développée (PVGD) multipliée par la fréquence cardiaque (FC). Les données sont des moyennes de 6 coeurs ± SEM. ** p<0,01 ; ***p<0,001.

Les données de la **Figure 5** confirment que :
- Le taxol seul, comme la ciclosporine A, seule à 1µM améliore la reprise des coeurs à la reperfusion. En effet, un gain de 25% de la PVGDxFC est observé par rapport au groupe contrôle (p<0,01).
- Le taxol associé à la ciclosporine A induit une protection majeure des coeurs à la reperfusion. Ainsi, la fonction est améliorée de 50 à 80% par rapport aux autres groupes conservés (p<0,001).
- Comme la ciclosporine et le taxol sont utilisés ici à leur concentration d'efficacité maximale (1 µM), seule une action synergique des 2 agents peut expliquer l'amélioration aussi importante observée.

### 3-4. Résultats vis à vis de la nécrose

Les coeurs sont conservés 8 heures à 4°C dans la solution Celsior (groupe « Contrôle »), supplémentée à 1µM de Taxol (groupe « Taxol »), ou à 1µM de ciclosporine A (groupe « Ciclo»), ou à 1µM de ciclosporine A et de Taxol (groupe « Tx+Ciclo »). A l'issue de l'ischémie froide, les coeurs sont reperfusés et la taille d'infarctus est analysée histologiquement après coloration TTC. Les résultats obtenus sont présentés **Figure 6** où les données sont des moyennes de 6 coeurs ± SEM. ** p<0,01 ; ***p<0,001 (par rapport au groupe contrôle).

Les données de la **Figure 6****,** par la mesure histologique de la taille d'infarctus, confirment également que le taxol associé à la ciclosporine A induit une protection maximale où l'infarctus tombe à 6,9% de la zone à risque (contre 8,7% et 9,7% respectivement pour le Tx et la CsA seuls), ce qui correspond à une réduction de 47% par rapport au groupe contrôle (p<0,001).

### 4 Conclusions

Les études réalisées ont mis en évidence l'impact de l'utilisation combinée de Ciclosporine A et de Taxol sur la viabilité du coeur, soumis à une séquence d'ischémie froide - reperfusion, situation rencontrée en clinique humaine lors de la conservation des greffons cardiaques.

Les conclusions sont les suivantes.

### Dans les modèles cellulaires :

- La ciclosporine A, comme le taxol, augmente, à certaines concentrations, la viabilité des cellules cardiaques au cours d'une séquence d'ischémie froide - reperfusion.
- Il existe un optimum de concentration pour chacun de ces 2 agents, autour de 1µM permettant d'augmenter la viabilité des cardiomyocytes entre 25 et 75% pour la ciclosporine A et entre 25 et 90% pour le Taxol, selon le modèle cellulaire utilisé.
- La ciclosporine A et le taxol, ajoutés seuls à la solution LYPS n'apportent rien, en termes d'effet cardioprotecteur. En revanche, la combinaison CsA+Tx, ajoutée à la solution LYPS à la concentration de 1µM, montre un effet cardioprotecteur marqué, avec une viabilité des cellules augmentée variant de 23 et 34%, selon le modèle cellulaire utilisé. A noter que les autres combinaisons à 5 et 10 µM n'apportent rien et semblent même plutôt délétères, confortant encore l'idée d'une concentration optimale. Ces résultats, obtenus sur 2 modèles cellulaires différents de cardiomyocytes en culture, soutiennent l'idée d'une action synergique des 2 composés puisque l'efficacité anti-ischémique observée ne résulte que d'une seule condition : la présence des 2 composés à leur concentration optimale.

### Dans le modèle de coeur isolé :

- Le taxol associé à la ciclosporine A dans la solution Celsior induit également une protection majeure des coeurs à la reperfusion (fonction améliorée de 80%, nécrose diminuée de 47%),
- Comme la ciclosporine et le taxol sont utilisés à leur concentration d'efficacité maximale (1µM), seule une action synergique des 2 agents peut expliquer l'amélioration aussi importante observée.

## Revendications

1. Solution aqueuse de conservation d'organe, et en particulier du myocarde, comprenant :
- de 100 à 130 mM de Na⁺,
- de 12 à 15 mM de K⁺,
- de 0,25 à 1,3 mM de Ca⁺⁺,
- de 0,5 à 1,5 µM de ciclosporine A, et
- de 0,5 à 1,5 µM de taxol.

2. Solution selon la revendication 1 **caractérisée en ce qu'**elle comprend :
- 120 ± 10 mM de Na⁺,
- 13 ± 1 mM de K⁺, et
- 1 ± 0,3 mM de Ca⁺⁺.

3. Solution selon la revendication 1 ou 2, **caractérisée en ce qu'**elle comprend, en outre, du magnésium Mg⁺⁺, présent de préférence à raison de 3,5 à 13 mM, et préférentiellement à raison de 4 ± 0,5 mM.

4. Solution selon l'une quelconque des revendications 1 à 3, **caractérisée en ce qu'**elle comprend, en outre :
- un polyéthylène glycol d'un poids moléculaire moyen de 8 000 Daltons ± 10%, de préférence à raison de 2 ± 0,5 g/L, et
- un polyéthylène glycol d'un poids moléculaire moyen de 20 000 Daltons ± 10%, de préférence à raison de 3 ± 0,5 g/L.

5. Solution selon l'une quelconque des revendications 1 à 4, **caractérisée en ce qu'**elle comprend de l'insuline et du glucose, de préférence à raison respectivement de 250 ± 10 UI/L et de 20 ± 1 mM.

6. Solution selon l'une quelconque des revendications 1 à 5, **caractérisée en ce qu'**elle comprend de l'insuline et du pyruvate, de préférence à raison respectivement de 250 ± 10 UI/L et de 2,5 ± 0,1 mM.

7. Solution selon l'une quelconque des revendications 1 à 6, **caractérisée en ce qu'**elle comprend du pyruvate, de l'aspartate et du glutamate, de préférence à raison respectivement de 2,5 ± 0,1mM, de 2 ± 1 mM et de 1,4 ± 1 mM.

8. Solution selon l'une quelconque des revendications 1 à 7, **caractérisée en ce qu'**elle comprend, en outre, de la procaïne présente, de préférence, à raison de 1 ± 0,5 mM.

9. Solution selon l'une quelconque des revendications 1 à 8, **caractérisée en ce qu'**elle comprend, en outre, de l'adénosine, de préférence à raison de 5 ± 1 mM.

10. Solution selon l'une quelconque des revendications 1 à 9, **caractérisée en ce qu'**elle comprend, en outre, du glutathion réduit, de préférence à raison de 5 ± 1 mM.

11. Solution selon l'une quelconque des revendications 1 à 10, **caractérisée en ce qu'**elle comprend, voire est constituée exclusivement de :
- 120 ±10 mM de Na⁺,
- 13 ± 1 mM de K+,
- 1 ± 0,3 mM de Ca⁺⁺,
- 1 ± 0,5 µM de ciclosporine A,
- 1 ± 0,5 µM de taxol,
- 4 ± 0,5 mM de Mg⁺⁺,
- 130 ± 12 mM de Cl⁻,
- 2 ± 0,5 g/L de polyéthylène glycol de poids moléculaire moyen de 8 000 Daltons ± 10%,
- 3 ± 1 g/L de polyéthylène glycol de poids moléculaire moyen de 20 000 Daltons ± 10%,
- 250 ± 10 UI/L d'insuline,
- 20 ± 1 mM de glucose,
- 2,5 ± 0,1mM de pyruvate,
- 2 ± 1 mM d'aspartate,
- 1,4 ± 1 mM de glutamate,
- 1 ± 0,5 mM de procaïne,
- et de l'eau.

12. Solution selon l'une quelconque des revendications 1 à 11, **caractérisée en ce qu'**elle comprend 1 ± 0,3 µM de taxol et 1 ± 0,3 µM de ciclosporine A.

13. Solution selon l'une quelconque des revendications 1 à 12, **caractérisée en ce qu'**elle comprend, voire est constituée exclusivement de :
- 120 mM de Na⁺,
- 13 mM de K⁺,
- 1 mM de Ca⁺⁺,
- 1 µM de ciclosporine A,
- 1 µM de taxol,
- 4 mM de Mg⁺⁺,
- 130 mM de Cl⁻,
- 2 g/L de polyéthylène glycol de poids moléculaire moyen de 8 000 Daltons,
- 3 g/L de polyéthylène glycol de poids moléculaire moyen de 20 000 Daltons,
- 250 UI/L d'insuline,
- 20 mM de glucose,
- 2,5 mM de pyruvate,
- 2 mM d'aspartate,
- 1,4 mM de glutamate,
- 1 mM de procaïne,
- et de l'eau.

14. Solution selon l'une quelconque des revendications 1 à 13, **caractérisée en ce qu'**elle présente une osmolarité dans la gamme allant de 280 à 320 mOsm/L, de préférence de l'ordre de 290 mOsm/L.

15. Solution selon l'une quelconque des revendications 1 à 14, **caractérisée en ce qu'**elle est tamponnée à un pH de 7,35 ±0,05.

16. Solution selon la revendication 15, **caractérisée en ce qu'**elle est tamponnée avec la solution d'HEPES.

17. Solution selon l'une quelconque des revendications 1 à 16, **caractérisée en ce qu'**elle comprend, en outre, un fluidifiant membranaire, tel que l'éthanol, de préférence à raison 10 ± 5 mM.

18. Utilisation conjointe de la ciclosporine A et du taxol dans une solution pour la conservation *in vitro* d'un organe, et de préférence du myocarde.

19. Utilisation conjointe *in vitro* de la ciclosporine A et du taxol dans une solution pour la perfusion hypothermique ou l'immersion hypothermique d'un organe, et de préférence du myocarde.

20. Utilisation conjointe de la ciclosporine A et du taxol dans une solution pour la conservation d'un organe en hypothermie, et de préférence du myocarde, et notamment d'un greffon cardiaque.

21. Utilisation selon la revendication 20 **caractérisée en ce que** la solution est utilisée lors d'une ischémie froide, notamment à une température de 4°C à 15°C.

22. Utilisation selon l'une des revendications 18 à 21 pour assurer la viabilité d'un organe, et de préférence du myocarde, et notamment d'un greffon cardiaque, avant transplantation.

23. Utilisation selon l'une des revendications 18 à 22 **caractérisée en ce que** la ciclosporine et le taxol sont chacun présents dans la solution à une concentration de 1 ± 0,5 µM, de préférence à une concentration de 1 ± 0,3 µM, et préférentiellement à une concentration de 1 µM.

24. Utilisation selon l'une des revendications 18 à 23 **caractérisée en ce que** la ciclosporine et le taxol sont dans une solution telle que définie à l'une quelconque des revendications 1 à 17.

## Patentansprüche

1. Wässrige Lösung zur Konservierung von Organen und insbesondere des Myokards, umfassend:
- 100 bis 130 mM Na⁺,
- 12 bis 15 mM K⁺,
- 0,25 bis 1,3 mM Ca⁺⁺,
- 0,5 bis 1,5 µM Ciclosporin A, und
- 0,5 bis 1,5 µM Taxol.

2. Lösung nach Anspruch 1, **dadurch gekennzeichnet, dass** sie umfasst:
- 120 ± 10 mM Na⁺,
- 13 ± 1mM K⁺, und
- 1 ± 0,3 mM Ca⁺⁺.

3. Lösung nach Anspruch 1 oder 2, **dadurch gekennzeichnet, dass** sie außerdem Magnesium Mg⁺⁺, das vorzugsweise mit 3,5 bis 13 mM und bevorzugter mit 4 ± 0,5 mM vorhanden ist, umfasst.

4. Lösung nach einem beliebigen der Ansprüche 1 bis 3, **dadurch gekennzeichnet, dass** sie außerdem umfasst:
- ein Polyethylenglycol eines mittleren Molekulargewichts von 8000 Dalton ± 10%, vorzugsweise mit 2 ± 0,5 g/L, und
- ein Polyethylenglycol eines mittleren Molekulargewichts von 20000 Dalton ± 10%, vorzugsweise mit 3 ± 0,5 g/L.

5. Lösung nach einem beliebigen der Ansprüche 1 bis 4, **dadurch gekennzeichnet, dass** sie Insulin und Glukose, vorzugsweise mit jeweils 250 ± 10 UI/L und 20 ± 1 mM umfasst.

6. Lösung nach einem beliebigen der Ansprüche 1 bis 5, **dadurch gekennzeichnet, dass** sie Insulin und Pyruvat, vorzugsweisemit jeweils 250 ± 10 UI/L und 2,5 ± 0,1 mM umfasst.

7. Lösung nach einem beliebigen der Ansprüche 1 bis 6, **dadurch gekennzeichnet, dass** sie Pyruvat, Aspartat und Glutamat, vorzugsweise mit jeweils 2,5 ± 0,1 mM, 2 ± 1 mM und 1,4 ± 1 mM umfasst.

8. Lösung nach einem beliebigen der Ansprüche 1 bis 7, **dadurch gekennzeichnet, dass** sie außerdem Procain umfasst, das vorzugsweise mit 1 ± 0,5 mM vorhanden ist.

9. Lösung nach einem beliebigen der Ansprüche 1 bis 8, **dadurch gekennzeichnet, dass** sie außerdem Adenosin, vorzugsweise mit 5 ± 1 mM umfasst.

10. Lösung nach einem beliebigen der Ansprüche 1 bis 9, **dadurch gekennzeichnet, dass** sie außerdem reduziertes Glutathion, vorzugsweise mit 5 ± 1 mM umfasst.

11. Lösung nach einem beliebigen der Ansprüche 1 bis 10, **dadurch gekennzeichnet, dass** sie umfasst, sogar ausschließlich besteht aus:
- 120 ± 10 mM Na⁺,
- 13 ± mM K⁺,
- 1 ± 0,3 mM Ca⁺⁺,
- 1 ± 0,5 µM Ciclosporin A,
- 1 ± 0,5 µM Taxol,
- 4 ± mM Mg⁺⁺,
- 130 ± 12 mM Cl⁻,
- 2 ± 0,5 g/L Polyethylenglykol mit einem mittleren Molekulargewicht von 8000 Dalton ± 10%,
- 3 ± 1 g/L Polyethylenglykol mit einem mittleren Molekulargewicht von 20000 Dalton ± 10%,
- 250 ± 10 UI/L Insulin,
- 20 ± 1 mM Glukose,
- 2,5 ± 0,1 mM Pyruvat,
- 2 ± 1 mM Aspartat,
- 1,4 ± 1 mM Glutamat,
- 1,4 ± 0,5 mM Procain,
- und Wasser.

12. Lösung nach einem beliebigen der Ansprüche 1 bis 11, **dadurch gekennzeichnet, dass** sie 1 ± 0,3 µM Taxol und 1 ± 0,3 µM Ciclosporin A umfasst.

13. Lösung nach einem beliebigen der Ansprüche 1 bis 12, **dadurch gekennzeichnet, dass** sie umfasst, sogar ausschließlich besteht aus:
- 120 mM Na⁺,
- 13 mM K⁺,
- 1 mM Ca⁺⁺,
- 1 µM Ciclosporin A,
- 1 µM Taxol,
- 4 mM Mg⁺⁺,
- 130 mM Cl⁻,
- 2 g/L Polyethylenglykol mit einem mittleren Molekulargewicht von 8000 Dalton,
- 3 g/L Polyethylenglykol mit einem mittleren Molekulargewicht von 20000 Dalton,
- 250 UI/L Insulin,
- 20 mM Glukose,
- 2,5 mM Pyruvat,
- 2 mM Aspartat,
- 1,4 mM Glutamat,
- 1,4 mM Procain,
- und Wasser.

14. Lösung nach einem beliebigen der Ansprüche 1 bis 13, **dadurch gekennzeichnet, dass** sie eine Osmolarität in einem Bereich, der von 280 bis 320 mOsm/L, vorzugsweise in der Größenordnung 290 mOsm/L aufweist.

15. Lösung nach einem beliebigen der Ansprüche 1 bis 14, **dadurch gekennzeichnet, dass** sie bei einem pH von 7,35 ± 0,05 abgepuffert ist.

16. Lösung nach Anspruch 15, **dadurch gekennzeichnet, dass** sie mit der Lösung HEPES abgepuffert ist.

17. Lösung nach einem beliebigen der Ansprüche 1 bis 16, **dadurch gekennzeichnet, dass** sie außerdem einen Membranverflüssiger, wie Ethanol, vorzugsweise mit 10 ± 5 mM umfasst.

18. Gemeinsame Verwendung von Ciclosporin A und Taxol in einer in vitro Konservierung eines Organs, vorzugsweise des Myokards.

19. Gemeinsame in vitro Verwendung von Ciclosporin A und Taxol in einer Lösung für die hypothermische Perfusion oder die hypothermische Immersion eines Organs, vorzugsweise des Myokards.

20. Gemeinsame Verwendung von Ciclosporin A und Taxol in einer Lösung für die Konservierung eines Organs in Hypothermie und vorzugsweise des Myokards, und insbesondere eines Herztransplantats.

21. Verwendung nach Anspruch 20, **dadurch gekennzeichnet, dass** die Lösung bei einer kalten Ischämie, insbesondere bei einer Temperatur von 4°C bis 15°C verwendet wird.

22. Verwendung nach einem der Ansprüche 18 bis 21 zur Sicherstellung der Lebensfähigkeit eines Organs und vorzugsweise des Myokards und insbesondere eines Herzimplantats vor der Transplantation.

23. Verwendung nach einem der Ansprüche 18 bis 22, **dadurch gekennzeichnet, dass** das Ciclosporin und das Taxol jeweils in der Lösung in einer Konzentration von 1 ± 0,5 µM, vorzugsweise einer Konzentration von 1 ± 0,3 µM und besonders bevorzugt bei einer Konzentration von 1 µM vorhanden sind.

24. Verwendung nach einem der Ansprüche 18 bis 23, **dadurch gekennzeichnet, dass** das Ciclosporin und das Taxol in einer Lösung vorhanden sind, wie sie nach einem beliebigen der Ansprüche 1 bis 17 definiert ist.

## Claims

1. Aqueous solution for organ preservation, in particular for the myocardium, comprising:
• 100 to 130 mM of Na⁺;
• 12 to 15 mM of K⁺;
• 0,25 to 1,3 mM of Ca⁺⁺;
• 0,5 to 1,5 µM of cyclosporin A; and
• 0,5 to 1,5 µM of taxol.

2. Solution according to claim 1, **characterized in that** it comprises:
• 120 ± 10 mM of Na⁺;
• 13 ± 1 mM of K⁺; and
• 1 ± 0,3 mM of Ca⁺⁺.

3. Solution according to claim 1 or claim 2, **characterized in that** it further comprises magnesium Mg⁺⁺, preferably present at 3,5 to 13 mM, and more preferably at 4 ± 0,5 mM.

4. Solution according to any one of claims 1 to 3, **characterized in that** it further comprises:
• polyethylene glycol having a mean molecular weight of 8000 Daltons ± 10%, preferably at 2 ± 0,5 g/L; and
• polyethylene glycol having a mean molecular weight of 20 000 Daltons ± 10%, preferably at 3 ± 0,5 g/L.

5. Solution according to any one of claims 1 to 4, **characterized in that** it comprises insulin and glucose, preferably respectively at 250 ± 10 IU/L and 20 ± 1 mM.

6. Solution according to any one of claims 1 to 5, **characterized in that** it comprises insulin and pyruvate, preferably respectively at 250 ± 10 IU/L and 2,5 ± 0,1 mM.

7. Solution according to any one of claims 1 to 6, **characterized in that** it comprises pyruvate, aspartate and glutamate, preferably respectively at 2,5 ± 0,1 mM, and at 2 ± 1 mM, and at 1,4 ± 1 mM.

8. Solution according to any one of claims 1 to 7, **characterized in that** it further comprises procaine that is preferably present at 1 ± 0,5 mM.

9. Solution according to any one of claims 1 to 8, **characterized in that** it further comprises adenosine, preferably at 5 ± 1 mM.

10. Solution according to any one of claims 1 to 9, **characterized in that** it further comprises reduced glutathione, preferably at 5 ± 1 mM.

11. Solution according to any one of claims 1 to 10, **characterized in that** it comprises or is constituted exclusively of:
• 120 ± 10 mM of Na⁺;
• 13 ±1 mM of K⁺;
• 1 ± 0,3 mM of Ca⁺⁺;
• 1 ± 0,5 µM of cyclosporin A;
• 1 ± 0,5 µM of taxol;
• 4 ± 0,5 mM of Mg⁺⁺;
• 130 ± 12 mM of Cl⁻;
• 2 ± 0,5 g/L of polyethylene glycol having a mean molecular weight of 8000 Daltons ± 10%;
• 3 ± 1 g/L of polyethylene glycol having a mean molecular weight of 20 000 Daltons ± 10%;
• 250 ± 10 IU/L of insulin;
• 20 ± 1 mM of glucose;
• 2,5 ± 0,1 mM of pyruvate;
• 2 ± 1 mM of aspartate;
• 1,4 ± 1 mM of glutamate;
• 1 ± 0,5 mM of procaine;
• and water.

12. Solution according to any one of claims 1 to 11, **characterized in that** it comprises 1 ± 0,3 µM of taxol and 1 ± 0,3 µM of cyclosporin A.

13. Solution according to any one of claims 1 to 12, **characterized in that** it comprises or is constituted exclusively of:
• 120 mM of Na⁺;
• 13 mM of K⁺;
• 1 mM of Ca⁺⁺;
• 1 µM of cyclosporin A;
• 1 µM of taxol;
• 4 mM of Mg⁺⁺;
• 130 mM of Cl⁻;
• 2 g/L of polyethylene glycol having a mean molecular weight of 8000 Daltons;
• 3 g/L of polyethylene glycol having a mean molecular weight of 20 000 Daltons;
• 250 IU/L of insulin;
• 20 mM of glucose;
• 2,5 mM of pyruvate;
• 2 mM of aspartate;
• 1,4 mM of glutamate;
• 1 mM of procaine;
• and water.

14. Solution according to any one of claims 1 to 13, **characterized in that** it presents an osmolarity lying in the range of 280 mOsm/L to 320 mOsm/L, and preferably about 290 mOsm/L.

15. Solution according to any one of claims 1 to 14, **characterized in that** it is buffered to a pH of 7,35 ± 0,05.

16. Solution according to claim 15, **characterized in that** it is buffered with HEPES solution.

17. Solution according to any one of claims 1 to 16, **characterized in that** it further comprises a compound for increasing membrane fluidity, such as ethanol, preferably at 10 ± 5 mM.

18. Joint use of cyclosporin A and taxol in a solution for *in vitro* preservation of an organ, preferably the myocardium.

19. Joint use of cyclosporin A and taxol in a solution for *in vitro* hypothermic perfusion or hypothermic immersion of an organ, and preferably of the myocardium.

20. Joint use of cyclosporin A and of taxol in a solution for preserving an organ in hypothermia, and preferably the myocardium, and in particular a cardiac graft.

21. Use according to claim 20, **characterized in that** the solution is used during cold ischemia, in particular at a temperature from 4°C to 15°C.

22. Use according to any one of claims 18 to 21, for ensuring the viability of an organ before transplanting, and preferably of the myocardium, and in particular of a cardiac graft.

23. Use according to any one of claims 18 to 22, **characterized in that** the cyclosporin and the taxol are each present in the solution at a concentration of 1 ± 0,5 µM, preferably at a concentration of 1 ± 0,3 µM, and more preferably at a concentration of 1 µM.

24. Use according to any one of claims 18 to 23, **characterized in that** the cyclosporin and the taxol are in a solution as defined in any one of claims 1 to 17.
